# EUROPEAN PATENT SPECIFICATION

(11) **EP 2 861 544 B1**
(45) Date of publication and mention of the grant of the patent: **10.08.2016**
(21) Application number: 13727193.8
(22) Date of filing: 06.06.2013
(51) Int. Cl.: C04B 26/16, C04B 20/10

(54) **GROUT FOR TILES COATING**
MÖRTEL ZUR BESCHICHTUNG VON FLIESEN
RÉNOVATEUR DE JOINTS

(30) Priority: 13.06.2012 IT BO20120325
(43) Date of publication of application: 22.04.2015
(73) Proprietor: Litokol S.p.A., 42048 Rubiera (RE) (IT)
(72) Inventor: PASTORELLI, Stefano, I-42044 Gultieri (RE) (IT); VACCARI, Antonio, I-41015 Nonantola (MO) (IT)
(74) Representative: Negrini, Elena
(86) International application number: PCT/EP2013/061737
(87) International publication number: WO 2013/186122

(56) References cited:
- EP-A1- 2 457 938
- EP-A2- 1 666 430
- WO-A1-01/60883
- WO-A2-2008/012641
- DE-A1- 19 953 445
- US-A1- 2006 121 204
- US-A1- 2007 059 530
- US-B1- 6 562 894

## Description

### Technical Field

The present invention relates to the field concerning grouts, grouts and sealants or fillers for coatings and refers to a grout for tiles coating.

### Background Art

There are known grouts for tiles and/or coating mixtures based on epoxy or polyurethane, such as those described in WO2008012641 and US2006121204.

In particular WO2008012641 discloses a mixture for applying a coating including at least one epoxy ligand and a corresponding hardener in predefined proportions. The mixture comprises also at least one solid fraction in particles, having dimensions larger than a predetermined minimum value. The particles are subjected to sintering and subsequently coloring process and are fit to confer a suitable and almost time invariant white coloration. The mixture also comprises a rheological product fit to facilitate the application of the coating through the mixture in the fluid state. The mixture disclosed in WO2008012641 is very expensive to be carried out and does not provide optimal resistance to natural and artificial lighting, particularly at certain wavelengths.

Instead US2006121204 describes a water-based intermediate coating composition which contains a water-dispersible polyurethane composition is used that is obtained from: a polyisocyanate component containing diisocyanate as an essential component; a polyol component containing polycarbonate diol with an average molecular weight of 500 to 5,000 and carboxyl group-containing diol as essential components; an amine component containing a monoamine compound as an essential component; a carboxyl group-neutralizing component; and water. The mixture disclosed in US2006121204 requires amine compounds that can be source of unpleasant odours, or, according to some sources, may present health risks.

### Disclosure of Invention

A purpose of the present invention is to propose a grout for tiles sealing that provide an improved color stability and resistance of the white or the color of the grout itself making it virtually free from yellowing and alterations of the original color and not requiring amine component including a monoamine compound, hardeners catalyst and epoxy resins.

Another purpose of this invention is to propose a polymeric grout for grouting and/or sealing of coating ceramic or stone materials, for decorations and/or mosaics, based on a mixture of polyurethane resins and acrylic cross linking aqueous dispersion, having excellent water resistance.

Further purpose is to propose a grout ready for use or without the need for any preparation, in particular without dosing or mixing actions.

Another purpose is to propose a reusable or grout that at the end of the grouting operations can be resealed in the original packaging and that can be reused even after a few months to reduce waste.

Further purpose is to propose a grout and labelling free from risk phrases.

Another purpose is to propose a grout which, when used as putty or sealant, allows easy cleaning of the elements to which it was applied.

Further purpose is to propose a grout having stable and uniform color even when exposed to adverse environmental conditions and to natural and/or artificial lights.

Another purpose is to propose a grout suitable of drastically reducing the surface absorption of grouting making them water repellent with drop effect.

Further purpose is to propose a stain resistant grout and also having a good resistance to various chemicals.

Another purpose is to propose a grout which avoids dust and/or solvents release to the ambient.

Further purpose is to propose a grout virtually avoiding efflorescence formation.

Another purpose is to propose a grout provided with great resistance to bacterial and mould attack both when it is packaged both when it is placed in work.

Further purpose is to propose a grout having greater resistance of the finished product when it is in permanent contact with water and therefore also suitable for use in wet areas.

Another purpose is to propose a grout having greater strength and compactness.

Further purpose is to propose a grout fast and easy to be implemented.

### Brief Description of Drawings

The results of the experimental tests described below in detail are shown schematically in the attached graphs in which:

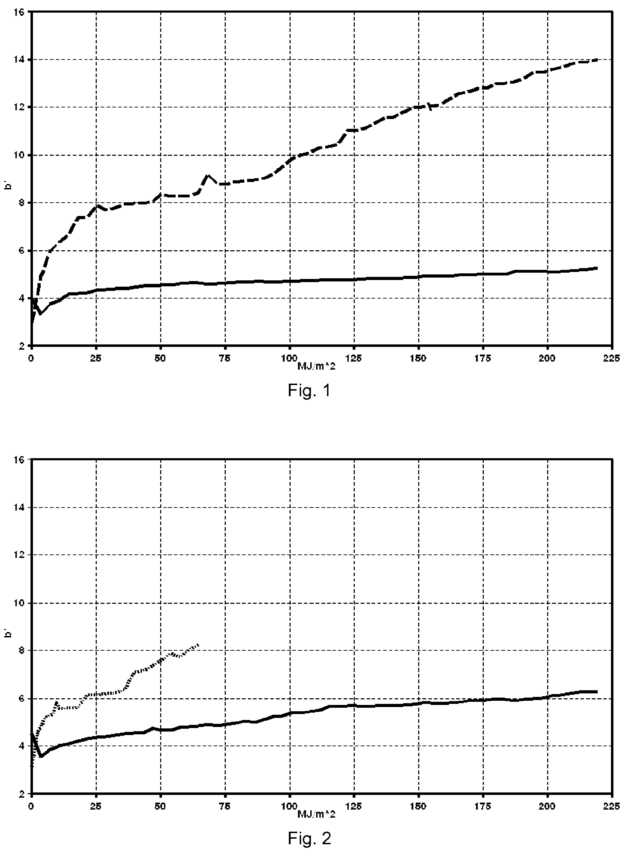

- figures 1 to 3 are Cartesian graphs that show the color stability of the grout of the present invention compared with grouts according to the teaching of the document WO2008012641 and with second known grouts, of the kind comprising amine, in accelerated irradiation conditions with natural light, wherein the horizontal axis refers to the value of the light energy radiated per unit area expressed in MJ/m² and the ordinate axis refers to the variation of the b* dimensional coordinate of the system CIE L* a* b*, where:
   - in figures 1, the continuous line represents the behaviour of the white grout for sealing according to the present invention and the dashed line represents a white grout according to WO2008012641;
   - in figures 2, the continuous line represents the behaviour of the white grout for sealing according to the present invention and the dotted line represents the second known white grout;
   - in figures 3 the continuous line represents the behaviour of the grey grout for sealing according to the present invention, and the dash-dot line represents the second known grey grout;
- figures 4 to 6 are cartesian graphs that show the color stability of the grout of the present invention compared with grouts according to the teaching of the document WO2008012641 and with second known grouts, of the kind comprising amine in conditions of alternation between irradiation and dark artificial, wherein the horizontal axis refers to the test duration, expressed in days, and the ordinate axis refers to the variation of the b* dimensional coordinate of the system CIE L* a* b*, where:

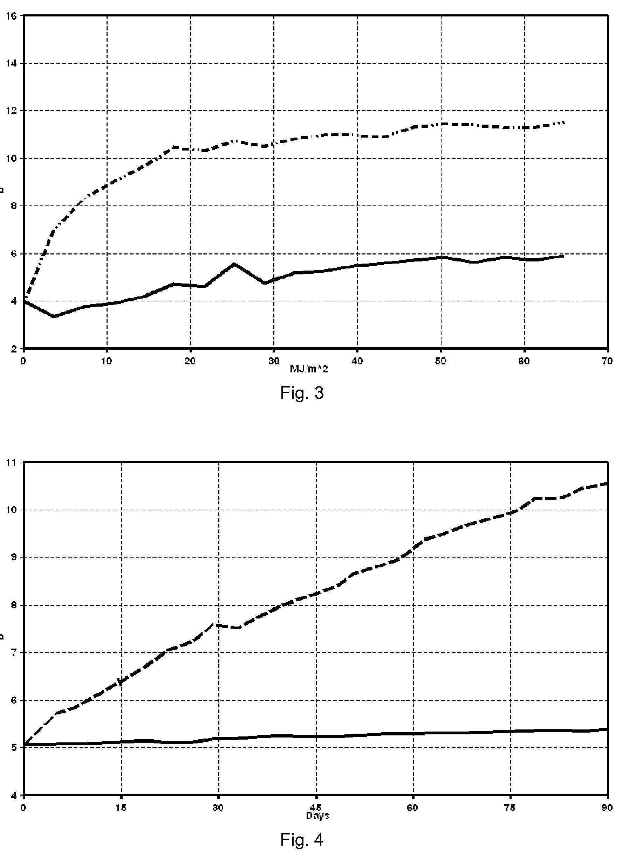

   - in figures 4, the continuous line represents the behaviour of the white grout for sealing according to the present invention and the dashed line represents a white grout according to WO2008012641;

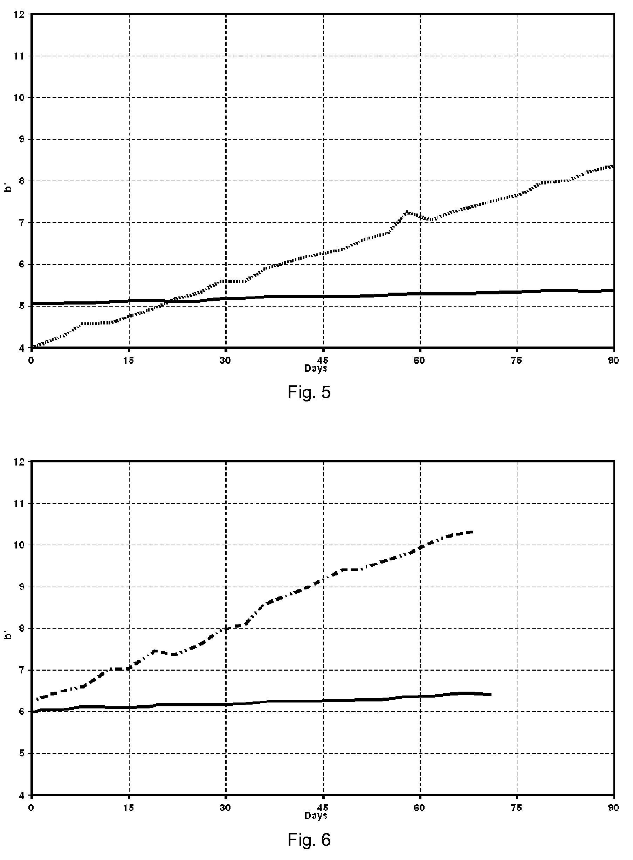

   - in figures 5, the continuous line represents the behaviour of the white grout for sealing according to the present invention and the dotted line represents the second known white grout;
   - in figures 6 the continuous line represents the behaviour of the grey grout for sealing according to the present invention, and the dash-dot line represents the second known grey grout;

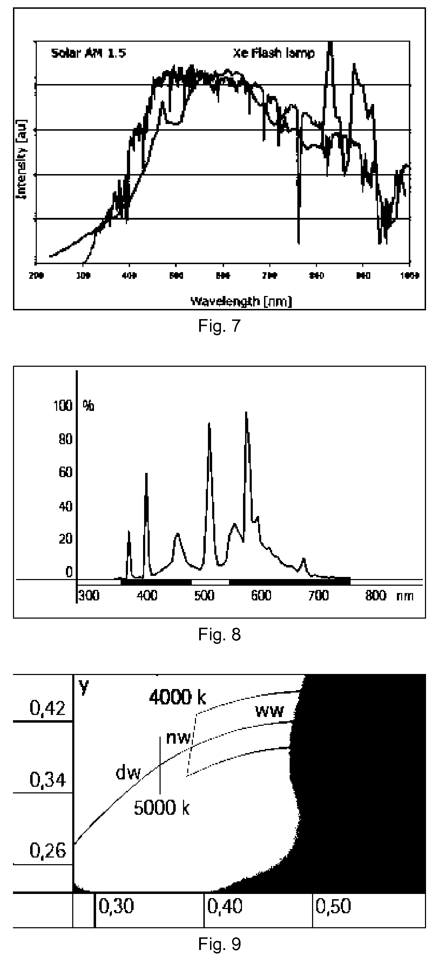

- figures 7 shows the spectrum emitted by the lamps used in the tests of natural radiation accelerated;
- figures 8 and 9 illustrate respectively the emitted spectrum and the color temperature of the lamps used in the irradiation testing artificial irradiation.

### Best Mode for Carrying Out the Invention

The grout for tiles coating of the present invention consists in a new grout containing a mixture of acrylic cross linking and polyurethane resin in aqueous dispersion having a good water resistance.

This grout is ready to use and does not require any preparation, avoiding dust releasing in the ambient, as occurs for cement products.

Once the grouting operation is over, not used material may be reused even after months if it is sealed in the original packaging reducing waste.

The grout of the present invention is exempt from labelling, health risks and is easy to clean: the color of the product is given by inert surface colored quartz and therefore colored pigments are not released on the surface of ceramics or mosaics so the cleaning steps is therefore easier.

Said colors or white grout are stable and uniform, the product does not contain cement avoiding the possible formation of efflorescence typical of cement products. The binder consists of a mixture of polyurethane resin and acrylic cross linking in aqueous dispersion, ensures high light stability, and prevents yellowing or color changes due to exposure to UV light or artificial light.

This grout is also water-repellent thanks to special hydrophobic additives mixed in the products that drastically reduce the grout surface absorption making them water repellent and with drop effect.

This grout is also stain resistant due to the low surface absorption and also has a good resistance to various chemicals.

It is important to note that the special combination of features of the first claim grout provides the grout itself an unexpected resistance to prolonged water immersion, surprisingly emerged and verified during long tests and comparative tests conducted to evaluate the new grout with respect to the previously known products. This combination of features provides an additional surprising effect concerning the extremely high intrinsic resistance to yellowing than vice versa occurs in known grouts as a result of their prolonged exposure to certain radiation; this lack of yellowing and original transparency preservation ensures, in combination with surface white or otherwise colored quartz, a high color stability of the product exposed, such as when used as grouting or sealant.

Each products and components concentration mentioned in the description and in the claims refers to the weight of the corresponding product or component with respect to the grout total weight.

The grout for tiles coating of the present invention comprises:
- An aliphatic polyurethane resin in aqueous dispersion, polycarbonate based at a concentration between about 12% and about 18%;
- an acrylic resin in aqueous dispersion at a concentration between about 2% and about 8%;
- colored quartz at a concentration between about 74% and 86%;
- wherein resin in aqueous dispersion means all resins and water used to obtain the dispersion.

In this way the grout has a double cross linking mechanism to increase the adhesion, hardness and chemical resistance characteristics.

The optimal composition of the grout provides about a 14% of aliphatic polyurethane, polycarbonate based, in aqueous dispersion containing an amount of 1-Ethylpyrrolidin-2-one CAS N.2687-91-4 in a concentration lower than 5%. Solid residue ranging between about 34 and about 36%, pH at 25°C ranging between about 7 and about 8.5, density of about 1.05 g/cm³, hardness ranging between about 98 and about 100 Shore A and anionic charge. This resin is inserted in the compound as main binder. The grout includes or may include the below components.

About 4% of an acrylic resin in water dispersion, having a dual cross linking mechanism to increase the adhesion, hardness, and chemical resistance. Solid residue comprised between about 39% and about 41%, pH between about 7.5 and about 9.5, density approximately 1.04g/cm³, MFFT about 3°C and particle size of the dispersion about 90 nm. This resin is inserted into formulated with the function of the secondary binder. This binder is essential to ensure the adhesion at the edges of the tile, to increase the compatibility of the primary binder with the cement, reducing the drying time of the finished product, the hardness and abrasion resistance of the finished product.

About 0.6% of Dipropylene glycol dimethyl ether CAS N.111109-77-4, having coalescent functions, to improve the formation of the surface film when the product is applied, thereby limiting the removal of the material applied between the joints in the cleaning step.

About 0.2% of in water self emulsifiable silicone antifoam.

About 0.15% of polyether modified siloxane having a density of about 1.037g/cm³. Additive used to improve the wetting of the substrate (quartz) in the formulation. Without this additive the compound would be dry, very slow and very hard, because the quartz tends to agglomerate.

About 0.2% of anionic thickening agent based on ASE (Alkali Swellable Emulsion), necessary to adjust the viscosity of the finished product. Dry solids content about 28%, about 1.06g/cm³ density, pH approximately between about 2.1 and about 3.5.

The grout object of the invention also comprises a powdery substance composed of a concentration of between 5% and 10% of tetra sodium pyrophosphate (CAS N.007722-88-5) and a concentration between 90% and 95% Sodium hydrate lithium magnesium silicate (CAS N.053320-86-8) pre-dispersed to 10% in distilled water, this substance is also commercially known as Laponite®.

This product has the same functionality as the cellulose ether, which provides smoothness, workability and thixotropic mixture but making significant improvements to the finished product compared to the same formulation having the cellulose ether.

The advantages are:
- resistance to bacterial and mould attack (providing a longer preservation of the packaged product), as the cellulose acts as a nutrient for bacteria and moulds, while the product is being inorganic and immune.
- greater resistance of the finished product to the permanent contact with water; the synergy between this product and the mixture between the primary and secondary bond, guarantees the maximum resistance in water of the finished product.
- greater strength and compactness of the finished product.

Approximately 0.5% of water-repellent protective, silicone resin emulsion in water consisting of a percentage ranging between about 50% and about 54% of amino alkyl poly siloxane and of a percentage ranging between about 5% and about 6% ethoxylated fatty alcohol polymer. The latter is inserted in the compound to increase water and stain resistance of the finished product.

About 80% of colored quartz. Particle having function of filler in the formulation. It is used to obtain a desired color.

### Experimental tests

The grout for tiles coating object of the present invention has been compared experimentally with two known grouts, the first including the teachings of the prior document WO2008012641 and the second of the kind comprising amine component to verify the color stability in conditions of natural and artificial radiation.

In all the tests some colorimetric measurements of the specimen have been carried out using a Datacolor CHECK II colorimeter, to evaluate the specimen color changing due to deterioration and/or aging of its surface. The evaluated chromatic changing corresponds to the progressive yellowing and was quantified through the variation of the value assumed by the b* dimensional coordinate (relative to the yellow color, for positive values of the axis) of the system CIE L* a* b*, based on experimental observations correlation techniques and methodologies by DoE (Design of Experiments methodology).

The characteristics of the Datacolor CHECK II colorimeter are:
Measuring principle: Dual beam sphere - automatic specular port;
Spectral range: 360 to 700nm (depending on model);
Effective bandwidth: 10nm;
Wavelength resolution: 2nm;
Spectrometer principle: Concave holographic grating;
Detector: Proprietary active pixels dual 256 element diode array;
Measurement time: <2.5 seconds;
Aperture sizes: LAV 15mm 11 mm;
Source / sensor Daylight D65 / 10°;
Neon F11 / 10°;
Others A / 10°.

The accelerated natural light tests were carried out using a test chamber equipped with 3 xenon lamps having power adjustable from 1.7 to 2.1 kW and the test environments are:
Light intensity 50 W/m²;
Test chamber temperature = 38°C;
BST (black standard temperature) = 60°C;
Test chamber relative humidity = 50%.

The xenon lamps have been screened using a daylight filter suitable to reproduce the atmosphere shielding action against solar light, so as to simulate the natural light conditions to which a material is subjected if it is externally applied.

In particular it can be noted that
- in figure 1 the behaviour the b* dimensional coordinate of the white grout object of the present invention is substantially constant, while the behaviour on the white grout according to WO2008012641 presents a rapid variation initial increase followed by a nearly constant growth even if with lower slope;
- in figure 2 the behaviour of the b* dimensional coordinate of the white grout object of the present invention has a substantially lower increase than the one of the white grout according the second know grout;
- in figure 3 the behaviour of b* dimensional coordinate relative to the grey grout object of the present invention has a moderate increase with substantially constant slope, while the behaviour of the grey grout according to the second know grey grout presents a rapid initial increase followed by a moderate increase having a lower slope.

The accelerated natural light test results shown that the grout according the present invention presents a lesser yellowing (variation of the b* dimensional coordinate) compared to grouts according to WO2008012641 and US2006121204, both for white and grey grout.

The artificial light test has been conducted by placing the specimens in a temperature controlled environment at 23 °C and exposing them alternately to 8 hours of Neon artificial light and 16 hours of dark.

In particular it can be evidenced that
in figure 4 the behaviour of the b* dimensional coordinate relative to the white grout object of the present invention has no significant variations throughout the test period, on the contrary the white grout according to WO2008012641 increases in a substantially monotonous and rapid way;
in figure 5, similarly to figure 4, the behaviour of the b* dimensional coordinate relative to the white grout object of the present invention is nearly constant in contrast to the white grout according to the second know grout that, starting from an initial value lower than the one of the grout of the present invention, shows a steady increase of b* dimensional coordinate, that after about 20 days intercepts and exceeds the one of the grout according the present invention;
in figure 6 both the behaviour of b* dimensional coordinate are basically monotone increasing and the slope of the curve relative to grey grout according to the second know grout is substantially greater than the one relative to the grout according to the present invention.

Similarly to what occurred in the accelerated natural light test, even in the case of artificial light, alternating with dark, the grout according the present invention shows greater stability over time of the b* dimensional coordinate which corresponds to a greater color stability or to a lesser yellowing tendency.

### Industrial Applicability

A advantage of the present invention is to provide a grout for tiles sealing that provide an improved color stability and resistance of the white or the color of the grout itself making it virtually free from yellowing and alterations of the original color and not requiring amine component including a monoamine compound, hardeners catalyst and epoxy resins.

Another advantage of this invention is to provide a polymeric grout for grouting and/or sealing of coating ceramic or stone materials, for decorations and/or mosaics, based on a mixture of polyurethane resins and acrylic cross linking aqueous dispersion, having excellent water resistance.

Further advantage is to provide a grout ready for use or without the need for any preparation, in particular without dosing or mixing actions.

Another advantage is to provide a reusable or grout that at the end of the grouting operations can be resealed in the original packaging and that can be reused even after a few months to reduce waste.

Further advantage is to provide a grout and labelling free from risk phrases.

Another advantage is to provide a grout which, when used as putty or sealant, allows easy cleaning of the elements to which it was applied.

Further advantage is to provide a grout having stable and uniform color even when exposed to adverse environmental conditions and to natural and/or artificial lights.

Another advantage is to provide a grout suitable of drastically reducing the surface absorption of grouting making them water repellent with drop effect.

Further advantage is to provide a stain resistant grout and also having a good resistance to various chemicals.

Another advantage is to provide a grout which avoids dust and/or solvents release to the ambient.

Further advantage is to provide a grout virtually avoiding efflorescence formation.

Another advantage is to provide a grout provided with great resistance to bacterial and mould attack both when it is packaged both when it is placed in work.

Further advantage is to provide a grout having greater resistance of the finished product when it is in permanent contact with water and therefore also suitable for use in wet areas.

Another advantage is to provide a grout having greater strength and compactness.

Further advantage is to provide a grout fast and easy to be implemented.

## Claims

1. Grout for the sealing of ceramic materials **characterized in that** it comprises at least: an aliphatic polyurethane resin aqueous dispersion, polycarbonate based, at a concentration ranging between 12% and 18% in weight with respect to the grout; a cross linking acrylic resin aqueous dispersion, at a concentration ranging between 2% and 8% in weight with respect to the grout; colored quartz at a concentration ranging between 74% and 86% in weight with respect to the grout.

2. Grout according to claim 1, **characterized in that** the colored quartz is white or of any other color.

3. Grout according to claim 1 or 2 **characterized in that** the aliphatic polyurethane resin and cross linking acrylic resin concentrations in the grout are respectively of about 14% and about 4%.

4. Grout according to any of the previous claims **characterized in that** the aliphatic polyurethane, polycarbonate based, in aqueous dispersion has a solids content ranging between about 34% and about 36% at 25°C with pH value ranging between about 7 and about 8.5, density of about 1,05g/cm³, hardness between about 98 and about 100 Shore A and anionic charge.

5. Grout according to any of the previous claims **characterized in that** the cross linking acrylic resin in aqueous dispersion has a solids content ranging between about 39% and about 41%, pH ranging between 7.5 and 9.5, density approximately of 1.04 g/cm³, MFFT about 3° C and dispersion particle size of about 90nm.

6. Grout according to any of the previous claims **characterized in that** it comprises at least one among: dipropylene glycol dimethyl ether in concentration of about 0,6%; silicon antifoam auto emulsifiable in water in concentration of about 0,2% and modified siloxane polyether having density about 1,037 gr/cm3 in concentration of about 0,15%.

7. Grout according to any of the previous claims **characterized in that** it comprises a concentration of about 0,2% of anionic thickening agent based on Alkali Swellable Emulsion (ASE) chemistry with solid residue of about 28%, density of about 1,06 gr/cm3 and pH between 2,1 and 3,5.

8. Grout according to any of the previous claims **characterized in that** it comprises a powdered substance made up of a concentration between 5% and 10% of dismal sodium pyrophosphate and a concentration between 90% and 95% of sodium hydrate lithium magnesium silicate at a concentration of about 1% pre-dispersed at 10% in distilled water.

9. Grout according to any of the previous claims **characterized in that** it comprises a water repellent protective water based, silicon resin emulsion in water made up of about 50-54% of amino alkyl polysiloxane and about 5-6% of grease alcohol polymer ethoxylate in concentration of about 0,5% in the grout.

10. Grout according to any of the previous claims **characterized in that** it comprises a concentration of about 80% of white or superficially colored quartz.

## Patentansprüche

1. Mörtel zum Abdichten von keramischen Materialien, **dadurch gekennzeichnet, dass** er mindestens umfasst: eine wässrige aliphatische Polyurethanharz-Dispersion, die Polycarbonat-basiert ist, mit einer Konzentration im Bereich zwischen 12% und 18% bezogen auf das Gewicht des Mörtels, eine wässrige vernetzende Acrylharz-Dispersion mit einer Konzentration im Bereich zwischen 2% und 8% bezogen auf das Gewicht des Mörtels und farbigen Quarz mit einer Konzentration im Bereich zwischen 74% und 86% bezogen auf das Gewicht des Mörtels.

2. Mörtel gemäß Patentanspruch 1, **dadurch gekennzeichnet, dass** der farbige Quarz weiß oder von jeder anderen Farbe ist.

3. Mörtel gemäß Patentanspruch 1 oder 2, **dadurch gekennzeichnet, dass** die aliphatische Polyurethanharz-Konzentration und die vernetzende Acrylharz-Konzentration im Mörtel entsprechend bei ungefähr 14% und bei ungefähr 4% liegt.

4. Mörtel gemäß einem der vorhergehenden Patentansprüche, **dadurch gekennzeichnet, dass** das Polycarbonat-basierte aliphatische Polyurethan in wässriger Dispersion einen Feststoffanteil im Bereich zwischen ungefähr 34% und ungefähr 36% bei 25°C mit einem pH-Wert im Bereich zwischen ungefähr 7 und ungefähr 8,5, eine Dichte von ungefähr 1,05 g/cm³, eine Härte zwischen ungefähr 98 und ungefähr 100 Shore A sowie anionische Ladung aufweist.

5. Mörtel gemäß einem der vorhergehenden Patentansprüche, **dadurch gekennzeichnet, dass** das vernetzende Acrylharz in wässriger Dispersion einen Feststoffanteil im Bereich zwischen ungefähr 39% und ungefähr 41%, einen pH-Wert im Bereich zwischen 7,5 und 9,5, eine Dichte von ungefähr 1,04 g/cm³, eine Mindestfilmbildetemperatur (MFFT) von ungefähr 3°C und eine Dispersionspartikelgröße von ungefähr 90 nm aufweist.

6. Mörtel gemäß einem der vorhergehenden Patentansprüche, **dadurch gekennzeichnet, dass** er mindestens eins umfasst von: einem Dipropylen-Glycol-Dimethyl-Ether mit einer Konzentration von ungefähr 0,6%, einen Silizium-Antischaum, der selbst-emulgierbar in Wasser ist, mit einer Konzentration von ungefähr 0,2% und einen modifizierten Siloxan-Polyether mit einer Dichte von ungefähr 1,037 gr/cm³ mit einer Konzentration von ungefähr 0,15%.

7. Mörtel gemäß einem der vorhergehenden Patentansprüche, **dadurch gekennzeichnet, dass** er bei einer Konzentration von ungefähr 0,2% ein anionisches Verdickungsmittels basierend auf einer Alkaliquellbaren-Emulsions- (ASE) Chemie mit festen Rückständen von ungefähr 28%, einer Dichte von ungefähr 1,06 gr/cm³ und einem pH-Wert zwischen 2,1 und 3,5 aufweist.

8. Mörtel gemäß einem der vorhergehenden Patentansprüche, **dadurch gekennzeichnet, dass** er eine pulverförmige Substanz, die aus einer Konzentration zwischen 5% und 10% von trübem NatriumPyrophosphat und einer Konzentration zwischen 90% und 95% von Natriumhydrat-Lithium-Magnesium-Silicat mit einer Konzentration von ungefähr 1% voraufgelöst bei 10% in destilliertem Wasser aufweist.

9. Mörtel gemäß einem der vorhergehenden Patentansprüche, **dadurch gekennzeichnet, dass** er einen wasserabweisenden Schutz aufweist, wobei er eine Wasser-basierte Siliziumharz-Emulsion in Wasser aufweist, die aus ungefähr 50-54% Amino-Alkyl-Poly-Siloxan und ungefähr 5-6% Fett-Alkohol-Polymer-Ethoxylat mit einer Konzentration von ungefähr 0,5% im Mörtel besteht.

10. Mörtel gemäß einem der vorhergehenden Patentansprüche, **dadurch gekennzeichnet, dass** er eine Konzentration von ungefähr 80% an weißem oder künstlich gefärbtem Quarz umfasst.

## Revendications

1. Coulis pour le scellement de matières céramiques, **caractérisé par le fait qu'**il comprend au moins : une dispersion aqueuse de résine de polyuréthane aliphatique, à base de polycarbonate, à une concentration se situant dans la plage entre 12 % et 18 % en poids par rapport au coulis ; une dispersion aqueuse de résine acrylique réticulante, à une concentration se situant dans la plage entre 2 % et 8 % en poids par rapport au coulis ; du quartz coloré à une concentration se situant dans la plage entre 74 % et 86 % en poids par rapport au coulis.

2. Coulis selon la revendication 1, **caractérisé par le fait que** le quartz coloré est blanc ou de toute autre couleur.

3. Coulis selon l'une des revendications 1 ou 2, **caractérisé par le fait que** les concentrations en résine de polyuréthane aliphatique et en résine acrylique réticulante dans le coulis sont respectivement d'environ 14 % et d'environ 4 %.

4. Coulis selon l'une quelconque des revendications précédentes, **caractérisé par le fait que** le polyuréthane aliphatique, à base de polycarbonate, en dispersion aqueuse a une teneur en matières solides se situant dans la plage entre environ 34 % et environ 36 % à 25°C avec une valeur de pH se situant dans la plage entre environ 7 et environ 8,5, une masse volumique d'environ 1,05 g/cm³, une dureté entre environ 98 et environ 100 Shore A et une charge anionique.

5. Coulis selon l'une quelconque des revendications précédentes, **caractérisé par le fait que** la résine acrylique réticulante en dispersion aqueuse a une teneur en matières solides se situant dans la plage entre environ 39 % et environ 41 %, un pH se situant entre 7,5 et 9,5, une masse volumique d'approximativement 1,04 g/cm³, une MFFT d'environ 3°C et une dimension de particule en dispersion d'environ 90 nm.

6. Coulis selon l'une quelconque des revendications précédentes, **caractérisé par** le fait qu'il comprend au moins l'un parmi : l'éther diméthylique du dipropylène glycol à une concentration d'environ 0,6 % ; un anti-mousse à base de silicone auto-émulsifiable dans l'eau à une concentration d'environ 0,2 % et un siloxane modifié par polyéther ayant une masse volumique d'environ 1,037 g/cm³ à une concentration d'environ 0,15 %.

7. Coulis selon l'une quelconque des revendications précédentes, **caractérisé par** le fait qu'il comprend une concentration d'environ 0,2 % d'agent épaississant anionique à base d'une chimie d'émulsion gonflable dans un alcali (ASE) avec un résidu solide d'environ 28 %, une masse volumique d'environ 1,06 g/cm³ et un pH entre 2,1 et 3,5.

8. Coulis selon l'une quelconque des revendications précédentes, **caractérisé par** le fait qu'il comprend une substance pulvérulente composée d'une concentration entre 5 % et 10 % de pyrophosphate tétrasodique et une concentration entre 90 % et 95 % de silicate hydraté de sodium, de lithium et de magnésium à une concentration d'environ 1 % pré-dispersé à 10 % dans de l'eau distillée.

9. Coulis selon l'une quelconque des revendications précédentes, **caractérisé par** le fait qu'il comprend une émulsion dans l'eau de résine de silicone, protectrice, résistante à l'eau, composée d'environ 50-54 % d'amino alkyl polysiloxane et d'environ 5-6 % de polymère d'alcool gras éthoxylé à une concentration d'environ 0,5 % dans le coulis.

10. Coulis selon l'une quelconque des revendications précédentes, **caractérisé par** le fait qu'il comprend une concentration d'environ 80 % de quartz blanc ou coloré superficiellement.
